# EUROPÄISCHE PATENTANMELDUNG

(11) **EP 1 331 209 A2**
(43) Veröffentlichungstag der Anmeldung: **30.07.2003**
(21) Anmeldenummer: 03001781.8
(22) Anmeldetag: 28.01.2003
(51) Int. Cl.: C04B 28/26, C04B 40/00

(54) **Verfahren zum Anmischen eines Mörtels oder Mörtel-Leims aus Wasserglas und Feinstoff sowie Trockenbaustoff zur Nutzung dieses Verfahrens**

(30) Priorität: 28.01.2002 DE 10203159
(71) Anmelder: Mansfeld, Lothar, D-21502 Geesthacht (DE)
(72) Erfinder: Mansfeld, Lothar, D-21502 Geesthacht (DE)
(74) Vertreter: Glawe, Delfs, Moll & Partner

(57) **Zusammenfassung**

Verfahren zum Anmischen eines Mörtels oder Mörtel-Leims unter Verwendung von Wasserglas und Feinstoff. Um die Agglomeration des Feinstoffs zu vermeiden und eine gleichmäßig fließfähige Konsistenz zu erreichen, wird der Feinstoff mit dem ein Dispergiermittel enthaltenden Wasser gemischt, bevor das Wasserglas darin gelöst ist. Das Verfahren kann unter Verwendung eines Trockenbaustoffs durchgeführt werden, der im wesentlichen aus Wasserglaspulver, Feinstoff und dem Dispergiermittel sowie gegebenenfalls anderen Zusätzen und Zuschlägen besteht.

## Beschreibung

In der Bautechnik wird Wasserglas als Bindemittel für besondere Anwendungszwecke verwendet, beispielsweise wenn Hitzebeständigkeit und/oder Säurebeständigkeit verlangt werden. Wasserglas ist Alkalisilikat (Natron- oder Kaliwasserglas, Polymerwasserglas). Es wird im Bauwesen in flüssiger Form als wässrige Lösung (EP-B-364668) oder als festes Pulver (DE-A 655379; DE-A-611106; DE-A-506928; DE-A-573177; DE-C-69422804; EP-A-1081114; EP-A-0414965; EP-B-0364668; JP-A-11268029) verwendet. Wenn das Wasserglas zusammen mit feinteiligen Stoffen wie Flugasche oder amorpher Kieselsäure verwendet wird, bereitet es Schwierigkeiten, eine gleichmäßige Mischung herzustellen. Dies führt zu einer Verminderung der Festigkeit des Produkts oder, wenn zur Erleichterung der Mischung der Wasserzusatz erhöht wird, zu verstärkter Schrumpfung, Poren- und Rißbildung. Dies gilt unabhängig davon, ob das Wasserglas in fester oder flüssiger Form eingesetzt wird.

Der Erfindung liegt daher die Aufgabe zugrunde, ein Anmischverfahren für Wasserglas und Feinstoff zu schaffen, das zu einem gleichmäßigen Mischergebnis führt. Die Erfindung will ferner eine Baustoffmischung bereitstellen, die für dieses Verfahren geeignet ist.

Die Erfindung beruht auf der Erkenntnis, daß die bisher beobachteten Schwierigkeiten darauf beruhen, daß die Partikeln der feinteiligen Stoffe unter der Einwirkung elektrostatischer Kräfte, die durch die Mischbewegung entstehen, zu Agglomeration neigen oder bereits als agglomerierter Ausgangsstoff vorliegen. Da die Viskosität des Wassers durch den Wasserglasgehalt stark erhöht ist, ist es nicht in der Lage, die Partikeln im Mischvorgang hinreichend aufzuschließen und zu benetzen. Weiterhin können Begleitstoffe schon während des Mischens erste Ausfällungsreaktionen (SiO₂) des Wasserglases einleiten, was zur Bildung weiterer Konglomerate führt und die Situation dadurch verschlimmert.

Die erfindungsgemäße Lösung liegt in den Merkmalen der Ansprüche 1 und 11 sowie vorzugsweise denjenigen der Unteransprüche.

Der Grundgedanke der Erfindung besteht darin, den Wasseranteil unabhängig vom Wasserglas für den Mischvorgang mit den Feinstoffen zur Verfügung zu stellen. Das Wasser befindet sich in einem Zustand, in welchem seine Dispergierfähigkeit noch nicht durch Aufnahme von Wasserglas beeinträchtigt ist, aber durch ein Dispergiermittel erhöht ist.

Damit das Wasser während des Mischens mit dem Feinstoff noch frei oder weitgehend frei von gelöstem Wasserglas ist, wird dieses vorzugsweise nach dem Feinstoff oder gleichzeitig damit dem Mischvorgang zugeführt. Es ist aber auch nicht grundsätzlich ausgeschlossen, das Wasserglas vor dem Feinstoff dem Wasser zuzuführen, sofern dies in einem so kurzen zeitlichen Abstand geschieht, daß bei der Zugabe des Feinstoffs die Dispergierfähigkeit des Wassers noch nicht wesentlich durch Aufnahme von Wasserglas beeinträchtigt ist. Es kann in diesem Zusammenhang gegebenenfalls zweckmäßig sein, durch Wahl des Molverhältnisses SiO₂ zu Wasserglas eine geringe Lösegeschwindigkeit einzustellen.

Unter Mörtel wird im Bauwesen ein mit Wasser angemachtes Gemisch aus mineralischen Zuschlagstoffen, deren Größe bis zu einigen Millimetern reicht, und einem Bindemittel verstanden, das die Körner des Zuschlagstoffs miteinander verbinden soll. Das aus diesem Bindemittel mit Wasser und sehr feinen Bestandteilen sich bildende Gemisch wird als Leim bezeichnet. In diesem Sinne werden die Begriffe Mörtel und Leim auch im Zusammenhang mit der Erfindung benutzt. Der Leim besteht hier im wesentlichen aus Wasserglas und Feinstoff (weitere Zusätze werden unten erwähnt). Mit Mörtel haben wir es zu tun, wenn zu Wasserglas und Feinstoff ein Zuschlag gröberen Korns hinzutritt. Das erfindungsgemäße Verfahren kann sich beschränken auf die Herstellung des Leims oder kann in einem Zuge zur Herstellung des Mörtels führen, wenn der Mischvorgang sich nicht nur auf Wasserglas und Feinstoff, sondern gleichzeitig auf Zuschlag bezieht.

Die Abgrenzung zwischen Feinstoff und Zuschlag für die Zwecke der vorliegenden Erfindung liegt vorzugsweise im Korngrößenbereich von 0,02 mm bis 0,04 mm.

Es ist zweckmäßig, den Feinstoff und das Wasserglaspulver vor der Zusammenführung mit Wasser zu mischen. Die Mischung kann auch Zuschlag enthalten. Sie stellt einen bequem handhabbaren Trockenbaustoff dar. Das gilt zumal dann, wenn die Mischung auch schon das Dispergiermittel enthält, weil es dann nur noch notwendig ist, den Trockenbaustoff in einem vorgegebenen Mengenverhältnis mit Wasser zu mischen. Dies kann mit geringerem Aufwand und hinreichender Dosierungssicherheit an der Baustelle geschehen. Wenn der Zuschlag von vornherein in der Mischung enthalten ist, kann es allerdings vorkommen, daß nicht genug Wasser für die Lösung des Dispergiermittels zur Verfügung steht. Es kann deshalb zweckmäßig sein, zuerst eine Mischung aus Feinstoff, Wasserglaspulver und Dispergiermittel mit dem Wasser vorzumischen und den Zuschlag unter weiterem Mischen anschließend beizugeben. Bei dieser Zweiphasenmischung liegt der Suspensionsbedarf (Leimgehalt) sehr niedrig. Das erfindungsgemäße Verfahren bzw. der erfindungsgemäße Trockenbaustoff eröffnet damit die Möglichkeit, an Ort und Stelle einen stabilen und gut verarbeitbaren Wasserglasmörtel anzumischen, der auch eine stark abgemagerte Konsistenz haben kann.

Wenn das Dispergiermittel schon in der Trockenmischung von Wasserglaspulver und Feinstoff enthalten ist, sollte es nach einem weiteren Merkmal der Erfindung rascher in Wasser löslich sein als das Wasserglas. Es kann dann die Dispergierung des Feinstoffs rechtzeitig bewirken, bevor das Wasserglas in Lösung gegangen ist. Man kann das Dispergiermittel aber auch unmittelbar dem Anmachwasser zusetzen. Diese Lösung empfiehlt sich vor allem bei fabrikmäßiger Anwendung des Verfahrens.

Unter Dispergiermitteln werden hier alle Stoffe verstanden, die durch Herabsetzung der Oberflächenspannung des Wassers oder auf andere Weise dazu beitragen, die Agglomeration von Feinstoff zu verhindern oder wieder zu lösen. Es kann sich auch um solche Stoffe handeln, die in der Bautechnik als Plastifizierungs- oder Fließmittel bezeichnet werden. Geeignet sind beispielsweise Tenside, Ligninsulfonate, Naphthalinsulfonate, Melaminharze, Polycarboxylat (PC), Polycarboxylatether (PCE), sowie sonstige, jetzt bekannte oder später bekannt werdende Mittel mit analoger Wirkung.

Als Feinstoff wird zweckmäßigerweise größtenteils Flugasche eingesetzt, und zwar vorwiegend Steinkohlenflugasche. Sie sollte in ihren Eigenschaften weitgehendst den Zulassungskriterien als Betonzusatzstoff nach DIN 1045 entsprechen. Als Steinkohlenflugasche wird zweckmäßigerweise solche mit niedrigem Wasseranspruch und - bei geschäumtem Baustoff - niedriger Reindichte verwendet. Im übrigen können Tonmineralien als Feinstoffe wie z.B. Tonmehl, Kaolin und Bentonit eingesetzt werden.

Ferner ist es zweckmäßig, amorphe Kieselsäure mit einem Gewichtsanteil von mindestens 3 %, vorzugsweise einem Zehntel, weiter vorzugsweise mindestens einem Fünftel des gesamten Feinstoffs zu verwenden, wobei sie eine spezifische Oberfläche von mindestens 10 m²/g, vorzugsweise mehr als 20 m²/g, haben sollte. Bewährt hat sich die Verwendung von Mikrosilika (SF) mit einer spezifischen Oberfläche von 20 bis 25 m²/g oder von Fällungskieselsäure mit einer spezifischen Oberfläche von 30 bis 250 m²/g.

Die gesamte Feinstoffmasse sollte mindestens einem Viertel der trockenen Wasserglasmasse entsprechen.

Als Wasserglas kommen in Betracht Natronwasserglas, Kaliwasserglas, Polymerwasserglas sowie Gemische derselben.

Zweckmäßigerweise enthält die Trockenmischung einen Anreger für die Verfestigung des Wasserglases, insbesondere für die Auskristallisation von SiO₂. Vorzugsweise wird dafür ein Portland-Feinstzement (Type S der Feinheit d₉₅ ≤24 µm, weiter vorzugsweise Type F der Feinheit d₉₅ ≤16 µm der Spezifikation der Dyckerhoff-Baustoffsysteme) eingesetzt. Es eignen sich auch Normzemente nach DIN 1164. Weitere verwendbare Anreger sind Essigester, Ethylacetat, Natriumaluminat, Kalziumchlorid, Metalloxide, Metallhydroxide, Mineralsäuren, organische Säuren, Natriumsilicofluorid, Aluminiumphosphat sowie weitere bekannte Anreger.

In vielen Fällen ist es zweckmäßig, wenn der Mörtel-Leim einen Stabilisierer enthält, insbesondere dann, wenn er geschäumt werden soll. Geeignete Stoffe sind bekannt, beispielsweise Polysaccharide, Zellulosen (insbesondere Methylzellulose), Bentonite sowie Dickungsmittel.

Die Erfindung führt zu einem Mörtel-Leim von ausgezeichneter, gleichmäßiger Fließfähigkeit und Sämigkeit bei geringem Wassergehalt und entsprechend geringer Schrumpfung. Er kann leicht dünnschichtig verarbeitet werden, beispielsweise zur Verbindung von Leichtzuschlägen wie Blähton, Blähschiefer, Bims, Perlit zu haufwerksporösen und/oder geschlossenen Gefügen in der Herstellung von hitzebeständigen und/oder leichten Bauteilen. Er eignet sich vorzüglich zur Herstellung geschäumter Bauteile, weil die die Poren von einander scheidenden Lamellen dank der Homogenität des Mörtels eine hohe Stabilität besitzen. Die Schaumbildung kann auf bekannte Weise erfolgen, beispielsweise durch Zugabe von Porenbildner wie Aluminiumpulver, Siliziumpulver, Ferrosilizium-Pulver, Wasserstoffperoxid oder durch andere chemische oder mechanische Aufschäumung.

Er eignet sich ferner zur Herstellung von Mörtel und Beton in Verbindung mit Zuschlagstoffen wie natürliche Sande und Kiese, Brechsande und Splitte, Hartstoffe nach DIN 1100, Schamottemehl, Schamotte etc.

Je nach Art der Zuschläge und des Wasserglases wird eine Temperaturbeständigkeit zwischen 500 und 1000°C erreicht. Der Mörtel-Leim als solcher kann zur Bindung von Mineralstoffen und Mineralstoffgemischen, vorzugsweise Leichtzuschlägen in der Herstellung von Leicht-Baukörpern verwendet werden. Unter Zugabe von Abmagerungsstoffen verschiedener Korngrößen ergibt er einen chemikalien- und hitzebeständigen Mörtel für das Bauwesen, z.B. Sielbaumörtel, Spritzmörtel (Naßspritzverfahren), Bodenbeläge, vorgefertigte Elemente. Als geblähter oder feinporöser Isolier- und Brandschutzbaustoff kann er zu Elementen vorgefertigt oder im Naßspritzverfahren aufgebracht werden.

### Beispiel 1:

| **Ausgangsstoffe** | **Stoffanteile für 1.000g in g** |
|---|---|
| | |
| Steinkohlenflugasche (SFA) | 367 |
| Mikrosilika (SF) | 68 |
| Feinstzement (P-F) | 15 |
| Melaminharz (FM) | 8 |
| Kali-Wasserglas-Pulver | 542 |
| **Gesamt-Trockenbaustoff** | **1.000** |
| | |
| **Zugabewasser** | **396** |

### Beispiel 2:

| **Ausgangsstoffe** | **Stoffanteil für 1.000 g in g** |
|---|---|
| | |
| Flugasche (FA) | 538 |
| Mikrosilika (SF) | 32 |
| Feinstzement (P-F) | 9 |
| Melaminharz (FM) | 8 |
| Naphtalinsulfonat (FM) | 4 |
| Aluminiumpulver | 34 |
| Anreger / Härter | 17 |
| Natronwasserglas-Pulver | 358 |
| **Gesamt-Trockenbaustoff** | **1.000** |
| | |
| **Zugabewasser** | **310** |

Auf der Grundlage der in diesen Beispielen angegebenen Trokkenbaustoffe läßt sich unter weiterer Zugabe von Mineralstoffen und/oder gasbildenden Stoffen die Palette der Baustoffvarianten herstellen, die als Trockenbaustoff für die oben genannten Anwendungsarten geeignet sind.

## Patentansprüche

1. Verfahren zum Anmischen eines Mörtels oder Mörtel-Leims unter Verwendung von pulverförmigem Wasserglas und Feinstoff, **dadurch gekennzeichnet, daß** der Feinstoff mit dem Wasser unter Verwendung eines Dispergiermittels gemischt wird, bevor das Wasserglas darin vollständig aufgenommen ist.

2. Verfahren nach Anspruch 1, **dadurch gekennzeichnet, daß** das Wasserglaspulver nicht früher als der Feinstoff mit dem Wasser zusammengeführt wird.

3. Verfahren nach Anspruch 1 oder 2, **dadurch gekennzeichnet, daß** eine trockene Mischung aus Feinstoff und Wasserglaspulver mit dem Wasser zusammengeführt wird.

4. Verfahren nach Anspruch 3, **dadurch gekennzeichnet, daß** das Dispergiermittel der Mischung aus Feinstoff und Wasserglaspulver beigemischt wird.

5. Verfahren nach Anspruch 4, **dadurch gekennzeichnet, daß** ein Dispergiermittel verwendet wird, daß rascher als das Wasserglaspulver in Wasser löslich ist.

6. Verfahren nach Anspruch 1, **dadurch gekennzeichnet, daß** das Dispergiermittel dem Wasser vor dem Mischen zugegeben wird.

7. Verfahren nach einem der Ansprüche 1 bis 6, **dadurch gekennzeichnet, daß** die Korngröße des Feinstoffs unterhalb 0,1 mm und zu einem wesentlichen Teil unter 0,04 mm liegt.

8. Verfahren nach einem der Ansprüche 1 bis 7, **dadurch gekennzeichnet, daß** als Feinstoff überwiegend Flugasche verwendet wird.

9. Verfahren nach einem der Ansprüche 1 bis 8, **dadurch gekennzeichnet, daß** der Feinstoff amorphe Kieselsäure umfaßt.

10. Verfahren nach einem der Ansprüche 1 bis 9, **dadurch gekennzeichnet, daß** der Feinstoff in einer Menge von mindestens einem Viertel der Masse des Wasserglaspulvers eingesetzt wird.

11. Verfahren nach einem der Ansprüche 1 bis 10, **dadurch gekennzeichnet, daß** etwaiger Zuschlag erst später eingemischt wird.

12. Trockenbaustoff, im wesentlichen bestehend aus Wasserglaspulver, Feinstoff und einem Dispergiermittel, das in Wasser schneller löslich ist als das Wasserglaspulver, sowie ggf. Zuschlag.

13. Trockenbaustoff nach Anspruch 12, **dadurch gekennzeichnet, daß** der Feinstoff überwiegend von Flugasche gebildet ist.

14. Trockenbaustoff nach Anspruch 13, **dadurch gekennzeichnet, daß** der Feinstoff zu mindestens 3 Gew.-% von amorpher Kieselsäure gebildet ist.

15. Trockenbaustoff nach einem der Ansprüche 12 bis 14, **dadurch gekennzeichnet, daß** der Feinstoff zu mindestens 5 Gew.-% von Tonmineralen gebildet ist.

16. Trockenbaustoff nach einem der Ansprüche 12 bis 15, **dadurch gekennzeichnet, daß** er einen Anreger enthält.

17. Trockenbaustoff nach einem der Ansprüche 12 bis 16, **dadurch gekennzeichnet, daß** er einen Stabilisierer enthält.

18. Trockenbaustoff nach einem der Ansprüche 12 bis 17, **dadurch gekennzeichnet, daß** er einen Porenbildner enthält.

19. Trockenbaustoff nach einem der Ansprüche 12 bis 18, **dadurch gekennzeichnet, daß** etwaige Zuschläge oder ein Teil der vorgesehenen Zuschläge im Trockenbaustoff nicht enthalten sind.
